# EUROPEAN PATENT APPLICATION

(11) **EP 2 602 456 A2**
(43) Date of publication of application: **12.06.2013**
(21) Application number: 12194851.7
(22) Date of filing: 29.11.2012
(51) Int. Cl.: F02C 7/22, F02K 1/68, F02K 1/76

(54) **Fuel or hydraulic fluid driven actuation systems for variable area fan nozzles**

(30) Priority: 08.12.2011 US 201161568541 P; 21.03.2012 US 201213426264
(71) Applicant: Honeywell International Inc., Morristown, NJ 07962-2245 (US)
(72) Inventor: VAUGHAN, Ron, Morristown, NJ New Jersey 07962-2245 (US); MCGILL, Michael, Morristown, NJ New Jersey 07962-2245 (US); CHAKKERA, Kevin K., Morristown, NJ New Jersey 07962-2245 (US); PORTOLESE, Larry, Morristown, NJ New Jersey 07962-2245 (US); BEHNKE, Mark, Morristown, NJ New Jersey 07962-2245 (US)
(74) Representative: Houghton, Mark Phillip

(57) **Abstract**

A variable area fan nozzle (VAFN) system for an aircraft is provided. The VAFN system includes a fluid-driven motor (682) configured to receive a fluid; one or more actuators (694) coupled to the fluid-driven motor (682); and a nozzle (400) assembly coupled to the actuators (694) such that the motor (682) drives the nozzle assembly (400) during operation

## Description

### CROSS-REFERENCE TO RELATED APPLICATION

This application claims the benefit of U.S. Provisional Application No. 61/568,541, filed December 8, 2011, the entirety of which is hereby incorporated by reference.

### TECHNICAL FIELD

The present invention relates to aircraft case assemblies, particularly case assemblies with actuators associated with an aircraft variable area fan nozzle (VAFN) system.

### BACKGROUND

Conventional gas turbine engines generally include a fan section and a core engine with the fan section having a larger diameter than that of the core engine. The fan section and the core engine are disposed about a longitudinal axis and are enclosed within an engine nacelle assembly.

Combustion gases are discharged from the core engine through a core exhaust nozzle while an annular fan flow, disposed radially outward of the primary airflow path, is discharged through an annular fan exhaust nozzle system defined between a fan nacelle and a core nacelle. A majority of thrust is produced by the pressurized fan air discharged through the fan exhaust nozzle, the remaining thrust being provided from the combustion gases discharged through the core exhaust nozzle.

The nozzle system may be positioned on or adjacent to the transcowls of a thrust reverser system. Generally, when a jet-powered aircraft lands, the landing gear brakes and imposed aerodynamic drag loads (e.g., flaps, spoilers, etc.) of the aircraft may not be sufficient to slow the aircraft down in the required amount of runway distance. Thus, jet engines on most aircraft include thrust reversers to enhance the braking of the aircraft. When deployed, a thrust reverser redirects the rearward thrust of the jet engine to a forward or semi-forward direction to decelerate the aircraft upon landing. When in the stowed position, the thrust reverser is in a position that generally does not redirect the engine thrust.

The fan nozzles of conventional gas turbine engines have a fixed geometry. Some gas turbine engines have implemented variable area fan nozzles. The variable area fan nozzles provide a smaller fan exit nozzle diameter to optimize operation during certain conditions. However, existing fan variable area nozzles typically utilize relatively complex mechanisms that undesirably increase overall engine weight and decrease fuel fuel efficiency.

Accordingly, it is desirable to provide improved variable area fan nozzles that, for example, reduce complexity, weight, and cost in a turbofan engine. Furthermore, other desirable features and characteristics of the present invention will become apparent from the subsequent detailed description of the invention and the appended claims, taken in conjunction with the accompanying drawings and this background of the invention.

### BRIEF SUMMARY

In one exemplary embodiment, variable area fan nozzle (VAFN) system for an aircraft is provided. The VAFN system includes a fluid-driven motor configured to receive a fluid; one or more actuators coupled to the fluid-driven motor; and a nozzle assembly coupled to the actuators such that the motor drives the nozzle assembly during operation.

In another exemplary embodiment, an engine assembly for an aircraft is provided. The assembly includes an engine system having an inlet and an outlet; a variable area fan nozzle (VAFN) system coupled to the engine system for adjusting the outlet of the engine system; and a fluid system. The VAFN system has a fluid-driven motor configured to receive a fluid; one or more actuators coupled to the fluid-driven motor; and a nozzle assembly coupled to the actuators such that the motor drives the nozzle assembly during operation to adjust the outlet. The fluid system is configured to provide the fluid to the fluid-driven motor.

### BRIEF DESCRIPTION OF THE DRAWINGS

The present invention will hereinafter be described in conjunction with the following drawing figures, wherein like numerals denote like elements, and

FIG. 1 is a perspective view of an aircraft engine system according to an exemplary embodiment;

FIG. 2 is a schematic cross-sectional view of the engine system of FIG. 1 according to an exemplary embodiment;

FIG. 3 is a partial, more detailed cross-sectional view of the engine system of FIG. 2 with a transcowl and nozzle in a first position according to an exemplary embodiment;

FIG. 4 is a partial, more detailed cross-sectional view of the engine system of FIG. 2 with a transcowl in a second position according to an exemplary embodiment;

FIG. 5 is a partial, more detailed cross-sectional view of the engine system of FIG. 2 with a nozzle in a second position according to an exemplary embodiment;

FIG. 6 is a simplified functional schematic representation of a fuel system that drives a motor associated with the case assembly;

FIG. 7 is a simplified functional schematic representation of a hydraulic system that drives a motor associated with the case assembly;

FIG. 8 is a simplified functional schematic representation of a VAFN system according to a first exemplary embodiment; and

FIG. 9 is a simplified functional schematic representation of a VAFN system according to a second exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

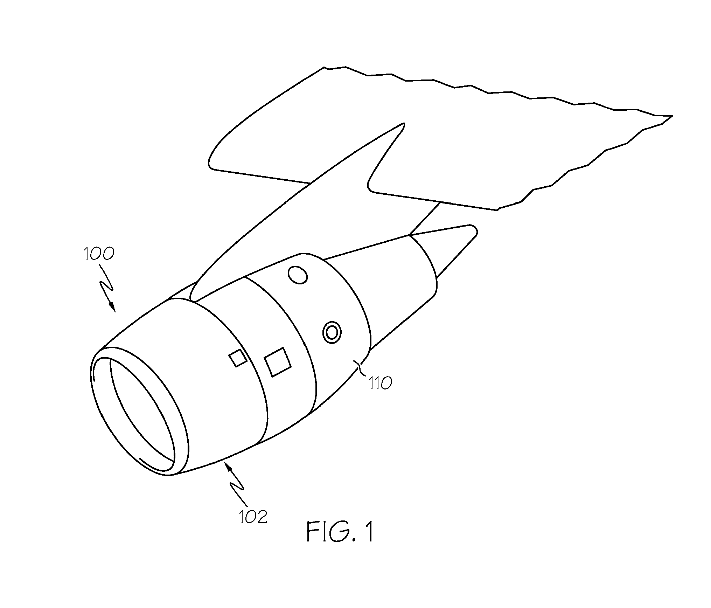

FIG. 1 is a perspective view of portions of an aircraft jet engine system 100 with a fan case 102. Typically, the fan case 102 encloses a turbofan engine, as described below, and mounts the engine for aircraft operation. As also discussed below, the engine system 100 may include a case assembly 110 to optimize operation.

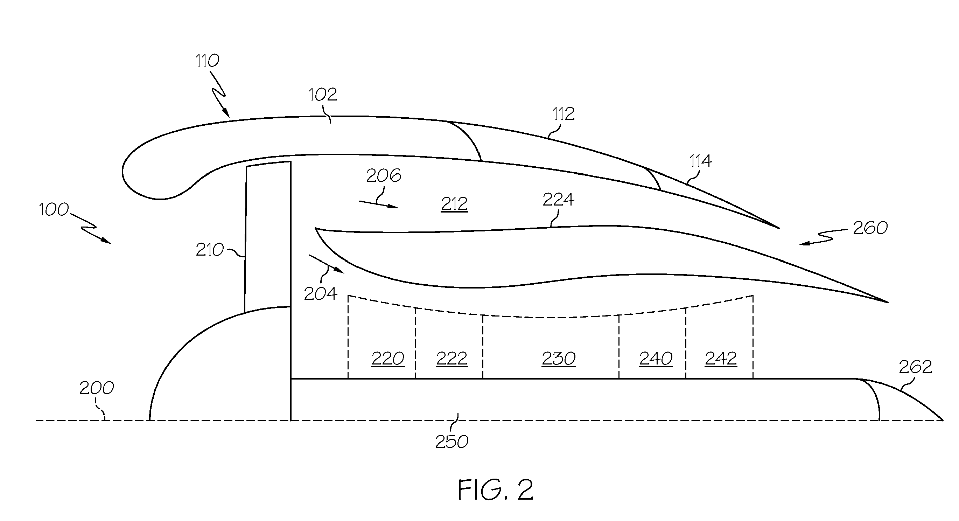

FIG. 2 is a schematic cross-sectional view of the engine system 100 of FIG. 1. The engine system 100 is circumferentially disposed about an engine centerline 200. The engine system 100 includes a fan 210, a low pressure compressor 220, a high pressure compressor 222, a combustion section 230, a high pressure turbine 240, and a low pressure turbine 242 arranged around an engine shaft 250. Typically, air is compressed in the compressors 220, 222, mixed with fuel and burned in the combustion section 230, and expanded in the turbines 240, 242. The turbines 240, 242 include rotors coupled for rotation with the engine shaft to drive the compressors 220, 222 and the fan 210 in response to the expansion of combustion gases.

In the example shown, the engine system 100 is a gas turbine bypass turbofan arrangement in which the diameter of the fan 210 is larger than that of the compressors 220, 222. As such, the case (or nacelle) 102 extends circumferentially about the fan 210 to define a bypass air flow path 212 extending between the case 102 and an inner cowl 224, which generally surrounds the compressors 220, 222, combustion section 230, and turbines 240, 242.

In operation, the fan 210 draws air into the engine system 100 as core flow 204 and into the bypass air flow path 212 as bypass air flow 206. A rear exhaust 260 discharges the bypass air flow 206 from the engine system 100, and the core flow 204 is discharged from a passage between the inner cowl 224 and a tail cone 262 to produce thrust.

As described in greater detail below, the case assembly 110 generally includes a thrust reverser actuation system (TRAS) 112 and a variable area fan nozzle (VAFN) system 114 to manipulate bypass air flow 206 in the flow path 212. In general, the TRAS 112 functions to selectively block the bypass air flow path 212 of the engine to provide braking to the aircraft, e.g., as redirected thrust. The VAFN system 114 functions to selectively adjust the flow area of the bypass air flow path 212 to optimize engine operation.

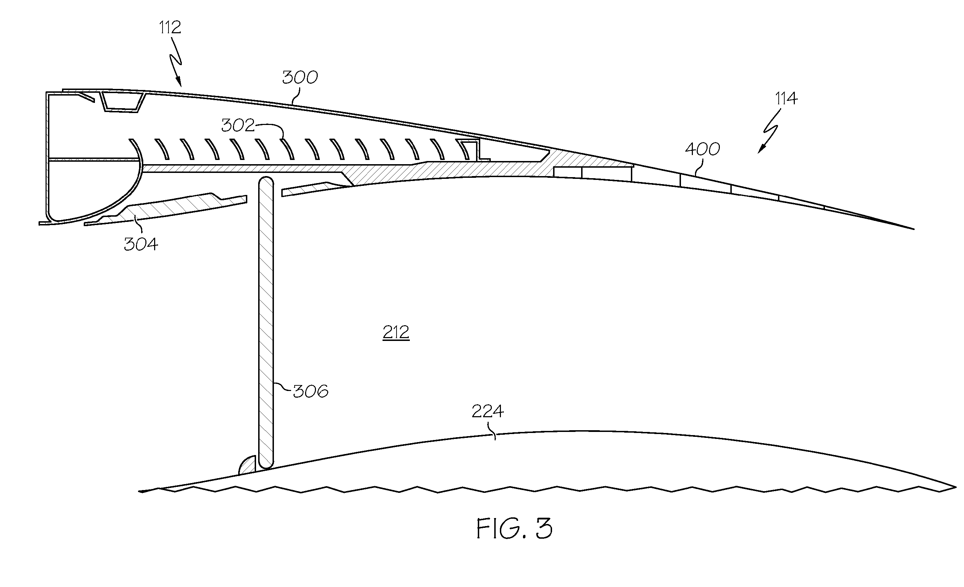

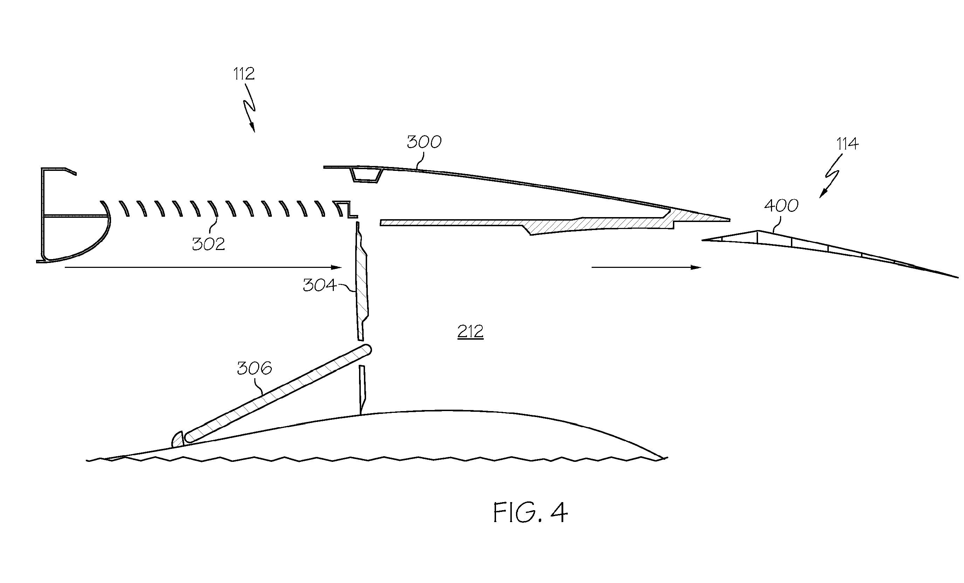

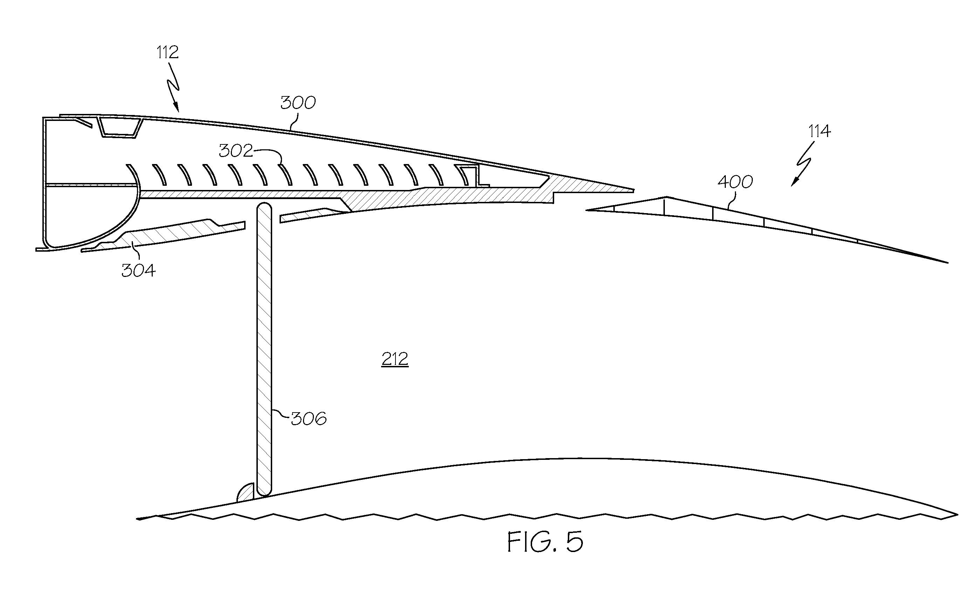

FIGS. 3-5 illustrate the operation of the TRAS 112 and VAFN system 114 relative to the bypass air flow path 212. In particular, FIG. 3 is a partial, more detailed cross-sectional view of the aircraft engine of FIG. 2 with the TRAS 112 and VAFN system 114 in a first position. FIG. 4 is a partial, more detailed cross-sectional view of the aircraft engine of FIG. 2 with the TRAS 112 in a second position, and FIG. 5 is a partial, more detailed cross-sectional view of the aircraft engine of FIG. 2 with the VAFN system 114 in a second position.

As is described in greater detail below, the TRAS 112 includes one or more semi-circular transcowls (or "reverser cowls") 300 that are positioned circumferentially on the outside of the jet engine fan case 102 (FIG. 1), typically on a fixed structure or torque box. In one exemplary embodiment, the TRAS 112 includes a pair of semi-circular transcowls 300 that extend around the case 102. The VAFN system 114 includes trailing edge fan nozzles 400 arranged at the downstream ends of the transcowls 300. Additional details about the operation and deployment of the transcowls 300 and nozzles 400 will be provided below with respect to FIGS. 3-5 prior to a more detailed description of the actuators that adjust the transcowls 300 and nozzles 400.

As shown more particularly in FIG. 3, the transcowls 300 cover a plurality of vanes 302, which may be cascade-type vanes that are positioned between the transcowls 300 and a bypass air flow path 212. When in the stowed position, as depicted in FIG. 3, the transcowls 300 are pressed against one or more stow seals, which keep air in the bypass air flow path 212. The transcowls 300 are mechanically linked to a series of blocker doors 304 via a drag link 306. In the stowed position, the blocker doors 304 form a portion of an outer wall and are therefore oriented parallel to the bypass air flow path 212.

However, as is shown in FIG. 4, when the TRAS 112 is commanded to deploy, the transcowls 300 are translated aft, causing the blocker doors 304 to rotate into a deployed position, such that the bypass air flow path 212 is blocked. This also causes the vanes 302 to be exposed and the bypass air flow to be redirected out the vanes 302. The redirection of the bypass air flow in a forward direction creates a reverse thrust and thus works to slow the airplane.

Now referring FIG. 5, which depicts the TRAS 112 in the stowed position, the VAFN system 114 may selectively adjust the nozzles 400 mounted on the trailing edges of the transcowls 300 to optimize the engine performance under different flight conditions. The nozzles 400 may be nozzle-like annular airfoil structures selectively translated (i.e., moved fore and aft) to vary the fan nozzle's exit area and to adjust an amount of engine bypass flow. As compared to FIG. 3, the nozzles 400 in FIG. 5 have been translated aft. Any number of nozzles 400 may be provided, although in one exemplary embodiment, two nozzles 400 are provided.

As such, the transcowls 300 and nozzles 400 are selectively translated with one or more actuation systems. In one exemplary embodiment, the nozzles 400 are only operated when the transcowl 300 is in the stowed position. In other words, the nozzles 400 are not operated when the aircraft is landing in this exemplary embodiment. Other embodiments may have different configurations.

As described below, the nozzles 400 are actuated by a fuel or hydraulic motor that respectively receive pressurized fluid (e.g., fuel or hydraulic fluid) from the fuel or hydraulic systems. In one exemplary embodiment, the motor produces rotary torque that drives one or more linear actuators. The actuators may be configured to decouple in certain scenarios. For example, the actuators associated with the nozzles 400 may be decoupled from the motor when the transcowls 300 are in the stowed position. The rotary power produced by the motor facilitates these functions. Additional details about actuation of the VAFN system 114 are provided below after a brief introduction of the fuel system and hydraulic system.

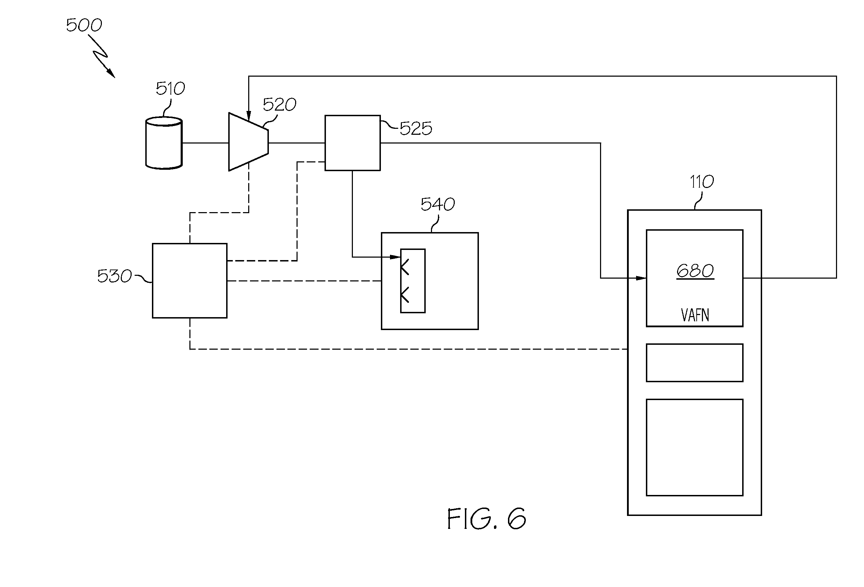

FIG. 6 is a simplified functional schematic representation of a fuel system 500 that may drive a motor associated with the case assembly 110. Additional details about the case assembly 110 are provided below, and a brief description of the fuel system 500 will now be provided..

The fuel system 500 generally includes a fuel source 510, a fuel pump 520, a fuel metering unit 525, and a controller 530. The fuel source 510 may be implemented as one or more tanks. In the depicted embodiment, the fuel pump 520 is a positive displacement pump such as, for example, a gear pump, although it could be implemented using any one of numerous other types of pumps. Although not shown, other components of the fuel system 500 may include various types of pumps, valves, motors, electrical controls, actuators, sensors, and the like.

During operation, a supply line delivers fuel from the fuel source 510 to the fuel pump 520. The fuel pump 520 provides fuel to the fuel metering unit 525 for delivery of fuel to a gas turbine engine 540 and also provides fuel to the case assembly 110. Additionally, fuel may be returned to the fuel pump 520 from the fuel metering unit 525 and the case assembly 110. In one exemplary embodiment, the fuel may be removed from the high pressure side of the pump 520 (e.g., via the fuel metering unit 525) and returned to the fuel system 500 to the low pressure side of the pump 520.

As is generally known, the gas turbine engine 540 receives the fuel, mixes the fuel with air, ignites the fuel-air mixture, and extracts energy from the resulting combustion products. In one exemplary embodiment, the gas turbine engine 540 corresponds to the engine of the engine system 100 described above with respect to FIG. 2, e.g., fuel may be introduced into the combustion section 230. As described in greater detail below, the case assembly 110 receives the fuel to as a pressurized fluid drive a motor, e.g., a VAFN system 680 discussed below.

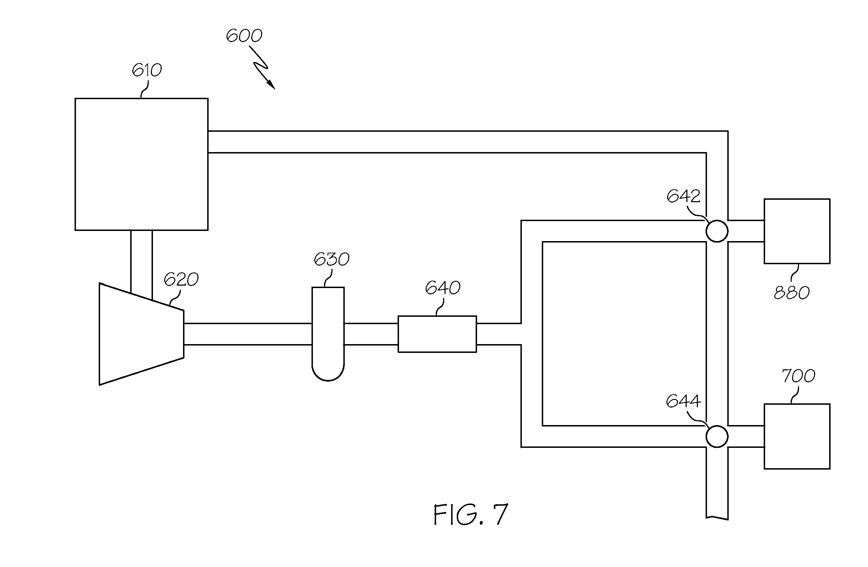

FIG. 7 is a simplified functional schematic representation of an aircraft hydraulic system 600 that may drive a motor associated with the case assembly 110. Additional details about the case assembly 110 are provided below, and a brief description of the hydraulic system 600 will now be provided.

The hydraulic system 600 generally includes a fluid source or reservoir 610, a power pump 620, a filter 630, and a pressure regulator 640. The reservoir 610 may be implemented as one or more tanks. The pump 620 may be a positive displacement pump such as, for example, a variable displacement piston pump, although it could be implemented using any one of numerous other types of pumps. In general, the pump 620 may convert mechanical and/or electrical horsepower to hydraulic horsepower. The filter 630 generally removes impurities in the hydraulic system 600. The pressure regulator 640 functions to regulate pressure in the hydraulic system 600 and may be an integral element of the variable displacement piston pump 620. Although not shown, other components of the hydraulic system 600 may include various types of conduits, gages, pumps, valves, motors, electrical controls, actuators, sensors, and the like. The hydraulic fluid may be, for example, any suitable hydraulic fluid, including oil or mineral based hydraulic fluid.

During operation, the hydraulic system 600 generally removes and pressurizes hydraulic fluid from the reservoir 610 with the pump 620, and supplies the fluid to one or more systems 880 and 700 via selector valves 642 and 644. Any system may receive pressurized fluid from the hydraulic system 600. For example, the system 700 may be any appropriate aircraft system, including primary control booster, landing gear, wing control, door and hatchway operation, turrets, shock absorption, flap adjustments, and the like. In one exemplary embodiment, the system 880 is the VAFN system in which the hydraulic system functions to drive a hydraulic motor to adjust the nozzles 400 (FIGS. 3-5), as described below.

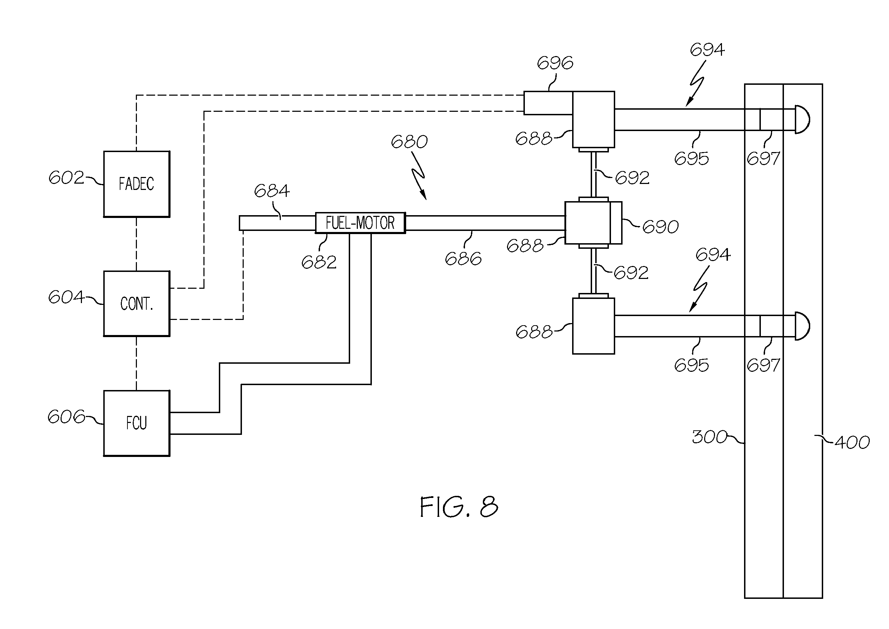

FIG. 8 is a simplified functional schematic representation of an actuation system of a variable area fan nozzle (VAFN) system 680 (e.g., VAFN system 114) that is driven by the fuel system 500. The VAFN system 680 may be similar to the VAFN system 114 described above to adjust the amount of engine bypass flow.

In general, the VAFN system 680 may include a Full Authority Digital Engine Controller (FADEC) 602, a low voltage controller 604, and a flow control unit 606 that collectively provide fuel, power, and control to the VAFN system 680. As also described in greater detail below, the VAFN system 680 includes a fuel-driven motor 682, a brake (or lock) 684, a speed snubber 686, one or more gear boxes 688, a manual drive 690, one or more flexible shafts 692, one or more actuators 694, and one or more sensors 696. As described in greater detail below, the VAFN system 680 may use fuel pressure from the fuel system 500 to drive the corresponding motor 682, and thus, the actuators 694 and nozzles 400.

In general, the FADEC 602, which may form part of a broader aircraft control system, provides adjustment commands for the VAFN system 680 based on signals from a pilot, an aircraft controller, and sensor signals, such as from the sensors 696. In particular, the FADEC 602 provides such commands to the low voltage controller 604. In response, the low voltage controller 604 provides command signals and/or power to the VAFN system 680, as described below, and commands signals and/or power to the fuel control unit 606. The low voltage controller 604 may include, for example, EMI filters. The flow control unit 606 is coupled to either the fuel system 500. In response to signals from the controller 604, the control unit 606 provides the necessary amount of fuel to the VAFN system 680 to effectuate the command, as also described below.

In one exemplary embodiment, the fuel control unit 606 may include a 2-stage EHSV for speed control with high pressure gain for minimizing hysteresis and threshold issues. For example, such an EHSV may be controlled with a milliamp current driver with a linear relationship between milliamp command and motor speed. Solenoids may be used in some situations. In general, however, the control unit 606 is configured to, in response to commands from the controller 604, selectively supply fuel to the motor 682.

In one exemplary embodiment, the low voltage controller 604 is supplied with power from a 28VDC power supply, although other power arrangements may be provided. In general, the controller 604 requires relatively low voltage, e.g., less than 110V. The flow control unit 606 may form part of the larger fuel system 500 (FIG. 6) and/or receive fuel from the system 500 described above. The VAFN system 680 may additionally receive inputs (e.g., arm and disarm commands) from the aircraft controller.

As such, during operation, the motor 682 receives fuel from the control unit 606 via feed lines. The motor 682 uses the pressurized fuel to produce mechanical torque, which in turn, drives the actuators 684 via the snubber 686, gearboxes 688, and shafts 692. In some embodiments, the snubber 686 may be omitted. The brake 684 may be an EM and/or fuel driven energized brake or lock.

In general, the motor 682 may be any motor that uses the pressure of the fuel from the fuel system 500 (FIG. 6) to produce a torque. In one exemplary embodiment, the fuel-driven motor 682 may have retrofitting advantages for existing engine systems in which fuel is already provided to the engine. In other words, the fuel-driven motor 682 may take advantage of existing fluid pressure in the engine system. In some embodiments, components of the fuel system 500 (FIG. 6) may not need to be modified to provide fuel to the VAFN system 680 since flow demands typically do not overlap with other uses. Unlike an EM motor, the motor 682 do not require a high voltage electrical power source or high power electric controller, e.g. the low voltage controller 604 is generally sufficient. In one exemplary embodiment, the fuel-driven motor 682 manufactured from materials that enable operation in low lubricity conditions, e.g., with low lubricity liquids like fuel. Additionally, by using a motor 682 that uses a pressure to generate a torque, the fuel only needs to be provided to the motor for actuation, e.g., not to the individual actuators. The motor 682 may be, for example, about 1-2 hp, or less than 10 hp, although any suitable size may be provided.

The actuators 684 function to drive the nozzles 400 in stowed and deployed positions in a synchronized manner. As described above in reference to FIGS. 3 and 4, the effective flow area may be adjusted by moving the nozzle position from 0% to 100% of stroke. Sensors 696 may provide position and status feedback information to the FADEC 602. Such sensors may be, for example, RVDT, LVDT, and/or resolver assemblies to provide T/R position signals. Although not specifically shown, locks, lock sensors, and other sensors and/or safety components may be provided.

The actuators 684 are typically ballscrew actuators with the translating nut attached to the rotary/linear variable differential transformers attached to the gearbox drive shaft, although other types of actuators may be provided, including electrical, mechanical, pneumatic, hydraulic, or the like, interconnected by appropriate power cables and conduits (not shown). The actuators 684 may be telescoping and/or decoupling actuators, for example, that decouple and render the nozzles 400 as fixed when the transcowl 300 is in a deployed position, e.g., exemplary embodiments provide an engaging/disengaging drive coupling with synchronized actuator locking and unlocking feature. A gimbal or other structure couples the actuators 684 to the nozzles 400. Additionally, a manual drive unit 680 mounts to the gearbox 688 and mates with a gearshaft allowing for manual extension and retraction of the nozzles 400. In one exemplary embodiment, the shafts 688 are flexible.

In exemplary embodiment, the nozzle actuator 694 is operated only after the thrust reverser transcowls 300 are stowed and locked. At that time, the drive coupling engages the gearbox on the fixed torque box to the nozzle actuator 694 and simultaneously unlocks the actuator 694 to enable fan nozzle operation during takeoff, cruise, and prior to landing/reverser operation. When the aircraft lands and the thrust reverser transcowl 300 is commanded to deploy, the drive coupling disengages and the nozzle actuator 694 is locked. As noted above, independent arrangements may be provided. For example, although the depicted embodiment illustrates the actuators 694 mounted on the transcowl 300, the actuators 694 may be mounted on a torque box of the engine or other structure.

As noted above, the actuators 694 may be linear actuators (e.g., ballscrew actuators) that are driven (e.g., retracted and extended) by the torque from the motor 682. In one exemplary embodiment, the linear actuators 694 may have first and second portions 695, 697. The first portion 695 may be coupled to the gearbox 688, and the second portion 697 may extend from the first portion 695 to the nozzle 200. At times, such as when the transcowls 300 are extended, the first portion 695 may be decoupled from the second portion 697, thereby preventing the first portion 695 from transmitting the torque to the second portion 697. Additional details about the actuators 694 may be provided in Application No. xx/xxx,xxx (Attorney Docket No. H0032860 (002.3696)), filed March 21, 2012 by the assignee of the present application and incorporated herein by reference.

In general, the fuel-driven motor 682 of the VAFN system 680 requires a reduction in maintenance. Typically, such fuel-driven motors do not need to be bled since the fuel tanks are relatively large and the fuel system will naturally bleed any air out of the system into the engine. Such an arrangement may provide a relative simple, light-weight, and low power case assembly 110. The motor 682 particularly uses the working pressure already present in the aircraft systems, e.g., from the fuel system. Similarly, in one exemplary embodiment, such a motor may effectively eliminate the large controller and power conditioning module, large electric motor and associated large-diameter, high voltage power feed lines, as would be required for an electric motor driven system.

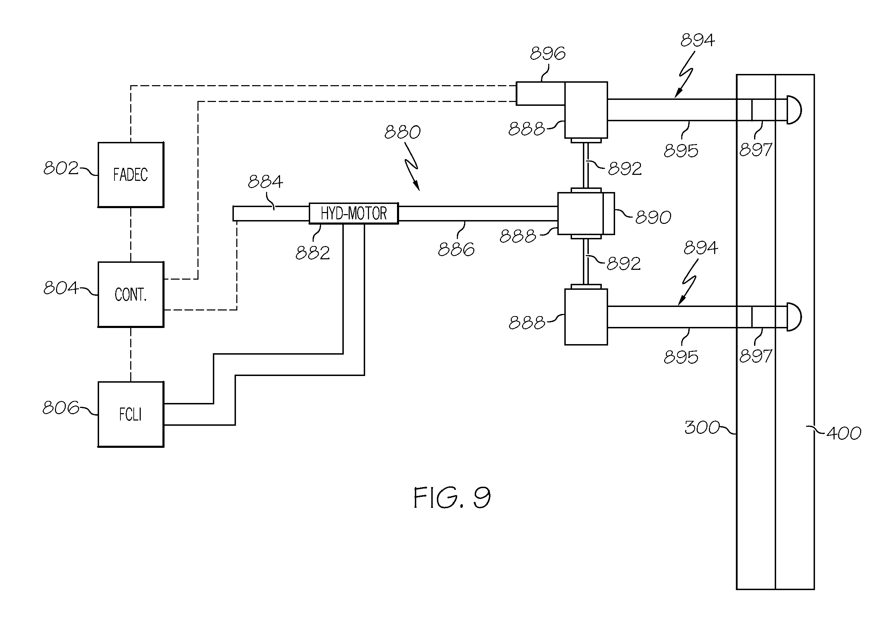

FIG. 9 is a simplified functional schematic representation of an actuation system of a variable area fan nozzle (VAFN) system 880 (e.g., VAFN system 114). The VAFN system 880 may be similar to the VAFN system 114 described above to adjust the amount of engine bypass flow.

In general, the VAFN system 880 may include a Full Authority Digital Engine Controller (FADEC) 802, a low voltage controller 804, and a flow control unit 806 that collectively provide hydraulic fluid, power, and control to the VAFN system 880. As also described in greater detail below, the VAFN system 880 includes a fluid or hydraulic-driven motor 882, a brake (or lock) 884, a speed snubber 886, one or more gear boxes 888, a manual drive 890, one or more flexible shafts 892, one or more actuators 894, and one or more sensors 896. As described in greater detail below, the VAFN system 880 may use hydraulic fluid pressure from the hydraulic system 600 to drive the corresponding motor 882, and thus, the actuators 894 and nozzles 200.

FADEC 802, which may form part of a broader aircraft control system, provides adjustment commands for the VAFN system 880 based on signals from a pilot, an aircraft controller, and sensor signals, such as from the sensors 896. In particular, the FADEC 802 provides such commands to the low voltage controller 804. In response, the low voltage controller 804 provides command signals and/or power to the VAFN system 880, as described below, and commands signals and/or power to the control unit 806. The low voltage controller 604 may include, for example, EMI filters. The flow control unit 806 is coupled to the hydraulic system 600. In response to signals from the controller 804, the control unit 806 provides the necessary amount of hydraulic fluid to the VAFN system 880 to effectuate the command, as also described below.

In one exemplary embodiment, the control unit 806 may include a 2-stage EHSV for speed control with high pressure gain for minimizing hysteresis and threshold issues. For example, such an EHSV may be controlled with a milliamp current driver with a linear relationship between milliamp command and motor speed. Solenoids may be used in some situations. In general, however, the control unit 806 is configured to, in response to commands from the controller 804, selectively supply fuel or hydraulic fluid to the motors 882.

In one exemplary embodiment, the low voltage controller 804 is supplied with power from a 28VDC power supply, although other power arrangements may be provided. In general, the controller 804 requires relatively low voltage, e.g., less than 110V. The flow control unit 806 may form part of the larger hydraulic system 600 (FIG. 7) and/or receive hydraulic fluid from the system 600 described above. The VAFN system 880 may additionally receive inputs (e.g., arm and disarm commands) from the aircraft controller.

As such, during operation, the motor 882 receives hydraulic fluid from the control unit 806 via feed lines. The motor 882 uses the pressurized hydraulic fluid to produce mechanical torque, which in turn, drives the actuators 884 (e.g,. first portion 885 and second portion 887) via the snubber 886, gearboxes 888, and shafts 892. In general, the actuators 884 snubber 886, gearboxes 888, and shafts 892 function as described above with reference to FIG. 8.

The fluid-driven motor 882 of the VAFN system 880 requires a reduction in maintenance. Such an arrangement may provide a relative simple, light-weight, and low power case assembly 110. The motor 882 particularly uses the working pressure already present in the aircraft systems, e.g., from the hydraulic system. Similarly, in one exemplary embodiment, such a motor may effectively eliminate the large controller and power conditioning module, large electric motor and associated large-diameter, high voltage power feed lines, as would be required for an electric motor driven system. In some embodiments, additional components, such as heat exchanger, additional hydraulic pumps, and other ancillary equipment may be provided to supplement the fluid-driven motor 882. In some embodiments, the fluid-driven motor 882 may be relatively small considering that the operating pressure of the hydraulic system 600 is relatively high. By using a motor 882 that uses a pressure to generate a torque, the hydraulic liquid only needs to be provided to the motor for actuation, e.g., not to the individual actuators. The motor 882 may be, for example, about 1-2 hp, or less than 10 hp, although any suitable size may be provided.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A variable area fan nozzle (VAFN) system (114, 680, 880) for an aircraft, comprising:
a fluid-driven motor (682, 882) configured to receive a fluid;
one or more actuators (694, 894) coupled to the fluid-driven motor (682, 882); and
a nozzle (200) assembly coupled to the actuators (694, 894) such that the motor (682, 882) drives the nozzle (200) assembly during operation.

2. The VAFN system (114, 680) of claim 1, wherein the fluid-driven motor (682) is a fuel-driven motor (682) and the fluid is fuel, and wherein the fluid-driven motor (682) is configured to receive the fuel from a fuel system (500) of the aircraft.

3. The VAFN system (114, 680) of claim 2, wherein the fuel-driven motor (682) is configured to output a torque.

4. The VAFN system (114, 680) of claim 3, wherein the one or more actuators (684) includes a linear actuator (694) driven by the torque provided by the fuel-driven motor (682).

5. The VAFN system (114, 680) of claim 4, wherein the linear actuator (694) is a ballscrew actuator (694).

6. The VAFN system (114, 880) of claim 4, wherein the linear actuator (694) has a first portion (695) and a second portion (697), and wherein the linear actuator (694) has a first position in which the first portion (695) is decoupled from the second portion (697) to prevent transmission of the torque between the first and second portions (695, 697), and a second position in which the first portion (695) is coupled to the second portion (697) to transmit the torque between the first and second portions (695, 697).

7. The VAFN system (114, 880) of claim 1, wherein the fluid-driven motor (882) is a hydraulic-driven motor (882) and the fluid is hydraulic fluid, and wherein the hydraulic-driven motor (882) is configured to receive the hydraulic fluid from a hydraulic system (600) of the aircraft.

8. The VAFN system (114, 880) of claim 7, wherein the hydraulic-driven motor (882) is configured to output a torque.

9. The VAFN system (114, 880) of claim 8, wherein the one or more actuators (894) includes a linear actuator (894) driven by the torque provided by the hydraulic -driven motor (682).

10. The VAFN system (114, 880) of claim 8, wherein the linear actuator (694) is a ballscrew actuator (694).
